# EUROPEAN PATENT APPLICATION

(11) **EP 4 238 785 A1**
(43) Date of publication of application: **06.09.2023**
(21) Application number: 23464003.5
(22) Date of filing: 09.02.2023
(51) Int. Cl.: B60C 23/12, B60C 23/00

(54) **DEVICE FOR AUTOMATIC TIRES INFLATION**

(30) Priority: 03.03.2022 RO 202200106
(71) Applicant: Stefan cel Mare University of Suceava, 720229 Suceava, County Suceava (RO)
(72) Inventor: Bejenar, Marian, Suceava (RO); Bejenar, Ciprian, Suceava (RO); Andrei, Alexandru Tudor, Suceava (RO); Milici, Dan Laurentiu, Lisaura, Suceava (RO); Rata, Gabriela, Suceava (RO); Paval, Mihaela, Valea Putnei, Pojorita, Suceava (RO)

(57) **Abstract**

***Summary:*** Device for automatic tires inflation, according to the invention, it involves a body with a unitary construction that houses, as the case may be, one or more mechanisms actuated elastically by actuation springs made of intelligent materials with the shape memory property, to the variation of temperature in the whole of its robust structure, whose shape is aerodynamic and possibility of attachment is flexible, so that it represents an adequate solution for the purpose it fulfills.

The summary of the invention will be published together with figure 1 and figure 2.

## Description

The invention refers to a device for the automatic inflation of inflatable tires, suitable as an accessory for tires subjected in operation to the cyclical phenomena of heating and cooling, which allows the harnessing of the thermal energy accumulated in their structure, in that it is provided with an actuation mechanism that allows its thermo-mechanical conversion.

For the purpose of automatic tire inflation, several solutions are known (US8435012B2, KR20200019499A, US2020062052A1) which consists, mainly, of methods, devices, equipment and/or systems involving different mechanical assemblies used for the purpose of harnessing the centrifugal force developed by a mass located in motion and/or of the mechanical work developed by the shaft of a motor, and in other cases, it involves different electrical assemblies made up of electrical and/or electronic components, used, as the case may be, for the purpose of automatically maintaining the pressure value of a gas that is introduced into tires through controlled pumping, as constant as possible.

The disadvantages of the described solutions consist in the fact that they are complex from a constructive point of view due to the abundance of elements used in their composition, they present a high probability of easily breaking down, to drastically decrease in performance, to decalibrate or to completely fail because they are vulnerable to weather or corrosive agents, and on another hand, they alter the balance and aerodynamic properties of the means of transport and of the wheels they equip, so that they limit the flow of air necessary to cool the braking systems with which they are accompanied, and for these reasons, they do not present convenience in operation.

The invention mainly solves a technical problem by which a simpler solution is used from a constructive point of view, so that it facilitates the automatic inflation of the tires and does not require rigorous maintenance, and the negative impact on the means of transport, wheels or braking systems is minimized.

Device for automatic tires inflation, according to the invention, it surprises the presented disadvantages and problems in that it assumes, mainly, a body with a unitary construction that houses, as the case may be, one or more mechanisms actuated by the variation of temperature in the whole of its robust structure, whose shape is aerodynamic and possibility of attachment is flexible, so that it represents an adequate solution for the purpose it fulfills.

The invention has the following advantages:
- The device introduces new possibilities for automatic tires inflation;
- The device presents simplicity and constructive flexibility, but also advantageous dimensions, without exceeding the dimensions of the wheels it equips;
- The device can be easily attached, in various ways, to the inner surface of the rim of a tire, so that it does not disturb its balance;
- The device allows the parallel connection of one or more similar or equivalent devices;
- The device minimizes the impact that other solutions introduce on the efficiency in moving the means of transport it equips;
- The device facilitates the automatic tires inflation, both during parking and during the movement of the means of transport it equips;
- The device reduces the frequency of verification and/or regulation the pressure in the tires and/or the need to use other devices, equipment and/or additional systems with the same purpose;
- The device does not depend on additional sources of energy, other than the thermal energy required for the drive mechanism, adopted for the purpose of automatic tires inflation;
- The device does not depend on other additional devices, equipment and/or systems with the same destination;
- The device is easy to maintain and does not require intensive maintenance;
- The device allows diagnosing the state of the actuation mechanism with the help of electrical and/or electronic devices, equipment and/or systems.

Below is further given an embodiment of the invention in connection with the following figures:

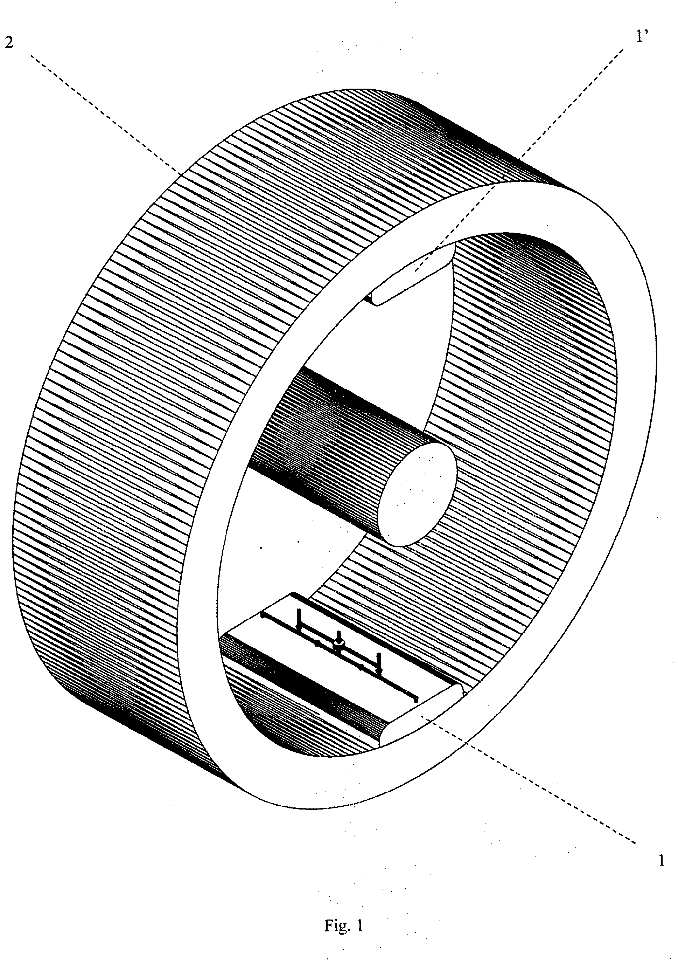

- Fig. 1 - Devices for automatic tires inflation, attached (variant) to the inner surface of the rim of a tire;

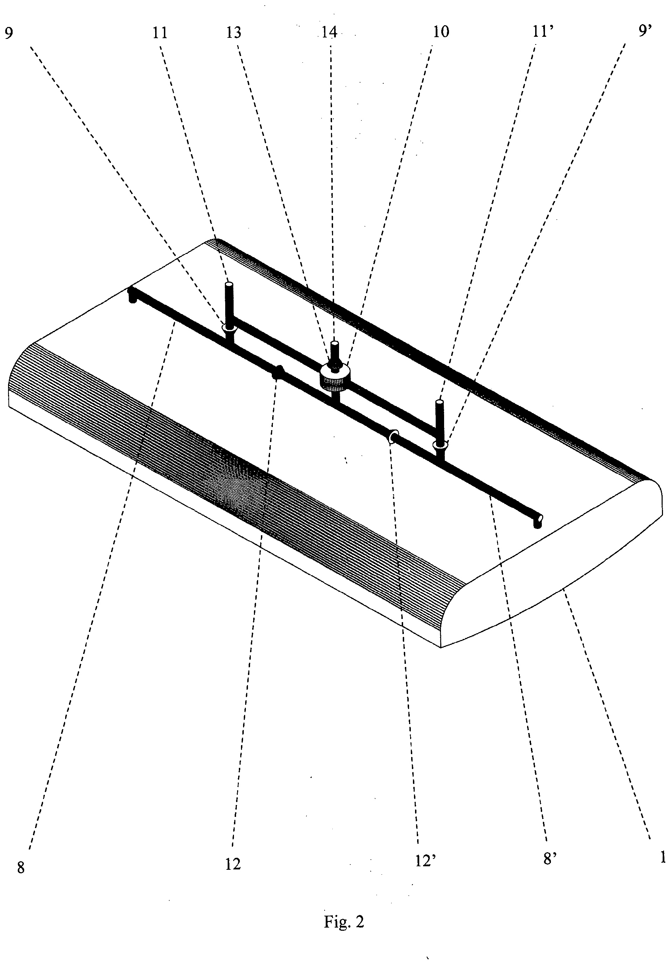

- Fig. 2 - Device (variant) for automatic tires inflation, perspective view;

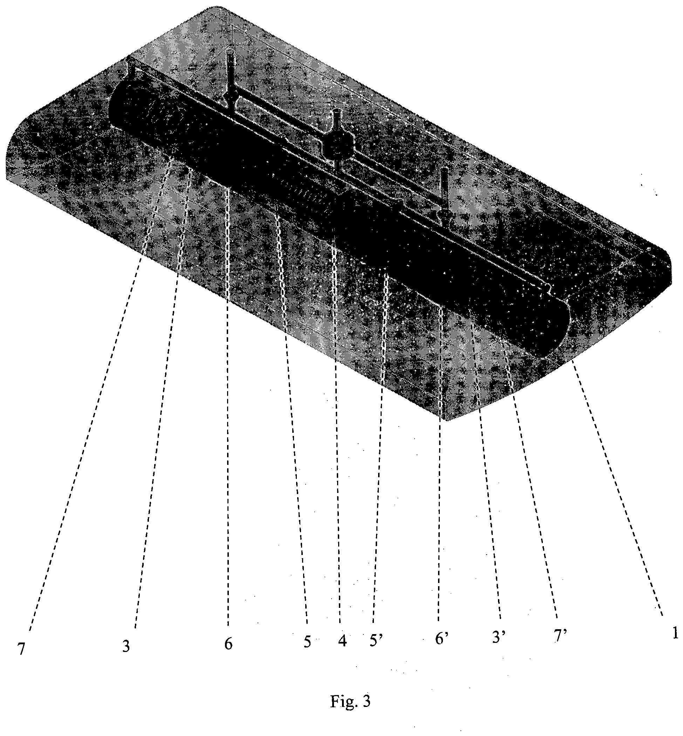

- Fig. 3 - Structure of a device (variant) for automatic tires inflation, perspective view;

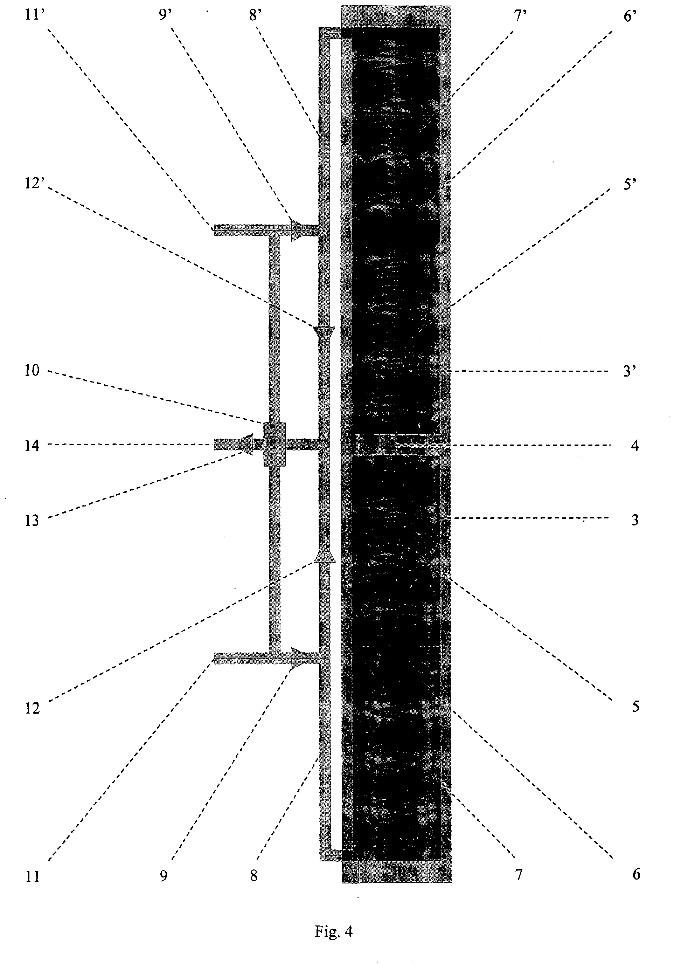

- Fig. 4 - Structure of a device (variant) for automatic tires inflation, side view.

Device for automatic tires inflation, is characterized mainly, in that it consists of a monobloc body 1, 1', which presents a base with an appropriate shape that ensures firmly contact with the rim 2, between which there is adequate thermal conductivity and in the interior of which are disposed, as the case may be, two or more chambers 3, 3', grouped in pairs and placed in a symmetrically way with respect to the median wall 4 through which they are separated, part located in the center of the monobloc body 1, 1', against which is anchored an actuation mechanism that reacts elastically to thermal variations, located inside each chamber 3, 3' and constituted, as the case may be, by one or more actuation springs 5, 5' made of intelligent materials of metallic nature with the shape memory property, fixed by the median wall 4 in a normal *uncompressed* position and in bound with the sliding walls 6, 6', which is connected, as appropriate, to one or more compression springs 7, 7' made of elastic materials of metallic nature and fixed by the external walls in a normal *compressed* position, at the ends of which there is a orifice corresponding to a pneumatic system, as the case may be, embedded inside or located outside the monobloc body 1, 1', consisting of the pneumatic tubes 8, 8', which allow a gas to be pumped from outside due to the connection with the one-way intake valves 9, 9', the pressure regulator 10 and the inlet ports 11, 11' or which allow a gas to be pumped to the tire due to the connection with the one-way exhaust valves 12, 12', the pressure regulator 10, the one-way exhaust valve 13 and the exhaust outlet 14, intended to connect the valve of the tire or the wheel chamber that the device equips, in order to inflate and/or automatically maintain the gas pressure in tires.

The invention consists, mainly, of a device for automatic tires inflation that allows the harnessing of the existing thermal energy in the rim 2, which supports its flexible balloon, on the surface of which it is kept in contact, accumulated as a result of some external factors or as a result of a friction action with the running surface, acceleration or braking that releases heat that is distributed in the tire structure, so that, due to thermal conduction, in the moment the temperature of the actuation springs 5, 5' exceeds the value of the constructively defined transformation temperature, their structure stiffens and they tense (compress) to the memorized shape towards the median wall 4 and at the same time they move the sliding walls 6, 6' in the same direction, which thus introduce gas into the chambers 3, 3', because they aspirate it through the pneumatic path provided by the inlet ports 11, 11', the one-way intake valves 9, 9' and pneumatic tubes 8, 8' and primes (decompresses) the compression springs 7, 7', and in the moment the temperature of the actuation springs 5, 5' falls below the value of the constructively defined transformation temperature, their structure becomes elastic and they are stretched (decompressed) towards the outer walls together with the sliding walls 6, 6' which are moved in the same direction, which thus release the gas from the chambers 3, 3', because they pump it through the pneumatic path provided by the pneumatic tubes 8, 8', the one-way exhaust valves 12, 12', the pressure regulator 10, the one-way exhaust valve 13 and the exhaust outlet 14, because the compression springs 7, 7' are released (compressed) and a constant gas pressure is automatically maintained at output, and the surplus is directed to the inlet ports 11, 11', for the purpose of inflating and/or automatically maintaining the gas pressure in tires.

Device for automatic tires inflation, according to the invention, can be reproduced with the same performances and characteristics whenever is necessary, a fact that constitutes an argument in favor of meeting the criterion of industrial applicability.

## Claims

1. Device for automatic tires inflation, **characterized in that**, it consists of a monobloc body (1), (1'), which ensures firmly contact with the rim (2), and in the interior of which are disposed, as the case may be, two or more chambers (3), (3'), grouped in pairs and placed in a symmetrically way with respect to the median wall (4) through which they are separated, part located in the center of the monobloc body (1), (1'), against which is anchored an actuation mechanism that reacts elastically to thermal variations, located inside each chamber (3), (3') and constituted, as the case may be, by the actuation springs (5), (5') in a normal *uncompressed* position, made of intelligent materials of metallic nature with the shape memory property, fixed by the median wall (4) and in bound with the sliding walls (6), (6'), which is connected, as appropriate, to the compression springs (7), (7') made of elastic materials in a normal *compressed* position, fixed by the external walls, at the ends of which there is a orifice corresponding to a pneumatic system, as the case may be, embedded inside or located outside the monobloc body (1), (1'), consisting of the pneumatic tubes (8), (8'), which allow a gas to be pumped from outside due to the connection with the one-way intake valves (9), (9'), the pressure regulator (10) and the inlet ports (11), (11') or which allow a gas to be pumped to the tire due to the connection with the one-way exhaust valves (12), (12'), the pressure regulator (10), the one-way exhaust valve (13) and the exhaust outlet (14).

2. Device for automatic tires inflation, **characterized in that**, it allows the harnessing of the existing thermal energy in the rim (2), so that, in the moment the temperature of the actuation springs (5), (5') exceeds the value of the constructively defined transformation temperature, their structure stiffens and they tense (compress) to the memorized shape towards the median wall (4) and at the same time they move the sliding walls (6), (6') in the same direction, which thus introduce by aspiration gas into the chambers (3), (3'), because they aspirate it through the pneumatic path provided by the inlet ports (11), (11'), the one-way intake valves (9), (9') and pneumatic tubes (8), (8') and primes (decompresses) the compression springs (7), (7'), and in the moment the temperature of the actuation springs (5), (5') falls below the value of the constructively defined transformation temperature, their structure becomes elastic and they stretches (decompresses) towards the outer walls together with the sliding walls (6), (6') which are moved in the same direction, which thus release the gas from the chambers (3), (3'), because they pump it through the pneumatic path provided by the pneumatic tubes (8), (8'), the one-way exhaust valves (12), (12'), the pressure regulator (10), the one-way exhaust valve (13) and the exhaust outlet (14), because the compression springs (7), (7') are being released (compressed) and a constant gas pressure is automatically maintained at output, and the surplus is directed to the inlet ports (11), (11').
